# FASCICULE DE BREVET EUROPEEN

(11) **EP 3 202 475 B1**
(45) Date de publication et mention de la délivrance du brevet: **31.10.2018**
(21) Numéro de dépôt: 17150628.0
(22) Date de dépôt: 09.01.2017
(51) Int. Cl.: B64C 39/02, A63H 27/00

(54) **BLOC PROPULSEUR PERMETTANT L'AFFICHAGE D'UN MESSAGE**
TRIEBWERK, DAS DIE ANZEIGE EINER NACHRICHT ERMÖGLICHT
PROPULSION UNIT ALLOWING THE DISPLAY OF A MESSAGE

(30) Priorité: 03.02.2016 FR 1650839
(43) Date de publication de la demande: 09.08.2017
(73) Titulaire: Parrot Drones, 75010 Paris (FR)
(72) Inventeur: BENATAR, Yoni, 93260 LES LILAS (FR); FOIRET, Alexis, 75016 Paris (FR)
(74) Mandataire: Dupuis-Latour, Dominique

(56) Documents cités:
- EP-A1- 2 873 614
- WO-A1-2011/091606
- WO-A2-2010/045641
- CN-U- 201 921 502
- CN-U- 203 001 968
- US-A1- 2007 049 159

## Description

L'invention concerne un bloc propulseur, notamment pour un drone, et un drone équipé d'un tel bloc propulseur.

Ces drones sont notamment les drones à voilure tournante de type quadricoptère ou des drones de type aile volante qui sont pourvus d'un ou plusieurs blocs propulseurs avec pour chacun une hélice entrainée par un moteur propre.

*L'AR.Drone 2.0* ou le *Bebop Drone* de Parrot SA, Paris, France sont des drones à voilure tournante de type quadricoptère et l'*eBee* de SenseFly SA, Suisse ou le *Disco* de Parrot sont des drones de type aile volante. Ils sont équipés d'une série de capteurs (accéléromètres, gyromètres 3 axes, altimètre) et peuvent comprendre au moins une caméra.

Les drones à voilure tournante sont pourvus de plusieurs blocs propulseurs entrainés par des moteurs respectifs aptes à être commandés de manière différenciée afin de piloter le drone en attitude et en vitesse.

Le WO 2011/058257A1 décrit précisément la structure des blocs propulseurs d'un drone à voilure tournante, qui comportent chacun une hélice entrainée par un moteur électrique via un système de réduction de la vitesse de rotation, généralement très élevée, de ce moteur.

En outre, il est connu du document EP 2 873 614 un bloc propulseur de drone dans lequel le bloc propulseur est du type à entrainement direct et le rotor du moteur est solidaire en rotation du moyeu de l'hélice.

Ces configurations présentent de bonnes performances mais ne permettent pas une évolution des capacités du bloc propulseur, notamment elles ne permettent pas d'intégrer de nouvelles fonctionnalités.

Les CN 203 001 968 U, US 2007/049159 A1, WO 2011/091606 A1 et WO 2010/045641 A2 décrivent diverses configurations d'hélices portant des moyens lumineux simples, éventuellement commandés à distance. Le but de l'invention est d'offrir une nouvelle fonctionnalité au bloc moteur notamment afin de véhiculer une information à l'utilisateur, par exemple au pilote du drone.

Pour atteindre les buts précités, l'invention propose une hélice du type général divulgué par le EP 2 873 614 précité, c'est-à-dire une hélice destinée à être assemblée sur un moteur électrique du type moteur synchrone sans balais à cage tournante ayant un arbre central creux, comprenant un moyeu et une pluralité de pales.

De façon caractéristique de l'invention, au moins une pale de l'hélice comprend une pluralité de diodes électroluminescentes, l'hélice comprend en outre un dispositif de commande des diodes électroluminescentes, un dispositif de communication positionné sur le moyeu de l'hélice de manière à communiquer avec un dispositif de communication d'un moteur électrique via l'arbre creux dudit moteur, le dispositif de commande des diodes étant apte à communiquer avec le dispositif de communication de l'hélice afin d'émettre et/ou recevoir des commandes.

Selon diverses caractéristiques subsidiaires avantageuses :
- le dispositif de communication est un dispositif émetteur et récepteur ;
- le dispositif de communication est un dispositif émetteur/récepteur à infrarouge ;
- l'hélice comprend un capteur de champ magnétique ; et
- la pluralité de diodes électroluminescentes est positionnée sur la longueur de l'hélice.

L'invention propose aussi un moteur électrique du type moteur synchrone sans balais à cage tournante, ayant un support moteur, une partie fixe comprenant un stator relié au support moteur, une partie mobile comprenant un rotor mobile autour d'un axe central de rotation du moteur, et un dispositif de commande moteur.

De façon caractéristique de l'invention, le moteur comprend un arbre central creux, le support moteur comprend un dispositif de communication apte à communiquer avec un dispositif de communication intégré dans une hélice assemblée sur le moteur, le dispositif de communication étant positionné d'un côté de l'arbre creux du moteur, et le dispositif de commande moteur est apte à communiquer avec le dispositif de communication du moteur afin d'émettre et/ou recevoir des commandes.

Selon diverses caractéristiques subsidiaires avantageuses :
- le moteur électrique comprend au moins une inductance disposée sur la partie fixe du moteur et au moins une inductance disposée sur la partie mobile du moteur pour recevoir de la puissance ;
- le dispositif de communication est un dispositif émetteur et récepteur.
- le dispositif de communication est un dispositif émetteur/récepteur à infrarouge ; et
- le moteur électrique comprend un aimant disposé sur la partie fixe du moteur.

L'invention propose aussi un bloc propulseur, en particulier pour un drone, comprenant une hélice comprenant un moyeu et une pluralité de pales, un moteur électrique du type moteur synchrone sans balais à cage tournante, ayant un support moteur, le moteur ayant une partie fixe comprenant un stator relié au support moteur, et une partie mobile comprenant un rotor mobile autour d'un axe central de rotation du moteur pour l'entrainement de l'hélice, et un dispositif de commande moteur.

De façon caractéristique de l'invention, au moins une pale de l'hélice comprend une pluralité de diodes électroluminescentes, l'hélice comprend en outre un dispositif de commande des diodes électroluminescentes, le moteur comprend un arbre central creux, le support moteur comprend un dispositif de communication positionné d'un côté de l'arbre creux du moteur de manière à communiquer avec un dispositif de communication intégré dans une hélice assemblée sur le moteur via l'arbre creux dudit moteur, et le dispositif de commande moteur est apte à communiquer avec le dispositif de communication du moteur afin d'émettre et/ou recevoir des commandes du dispositif de commande des diodes.

Selon diverses caractéristiques subsidiaires avantageuses :
- le moteur électrique comprend au moins une inductance disposée sur la partie fixe du moteur et au moins une inductance disposée sur la partie mobile du moteur pour recevoir de la puissance apte à alimenter le dispositif de commande des diodes ;
- les dispositifs de communication sont des dispositifs émetteur et récepteur ;
- les dispositifs de communication sont des dispositifs émetteurs/récepteurs à infrarouge ; et
- le moteur électrique comprend un aimant disposé sur la partie fixe du moteur et l'hélice comprend un capteur de champ magnétique de sorte à détecter la position de l'hélice par rapport à la partie fixe du moteur.

L'invention propose aussi un drone comprenant un corps de drone et au moins un bloc propulseur conforme à l'invention.

On va maintenant décrire un exemple de réalisation de l'invention, en référence aux dessins annexés où les mêmes références désignent d'une figure à l'autre des éléments identiques.
La Figure 1 est une vue en perspective d'un drone selon un mode de réalisation de l'invention, avec quatre blocs propulseurs.
La Figure 2 est une vue en coupe du bloc propulseur par un plan axial, avec l'hélice solidarisée au moteur, cette figure montrant notamment la structure interne du moteur à cage tournante.
La Figure 3 est une vue du résultat de l'affichage réalisé au moyen du bloc propulseur conforme à l'invention.
La Figure 4 est une vue fonctionnelle détaillée du bloc propulseur selon un mode de réalisation de l'invention.

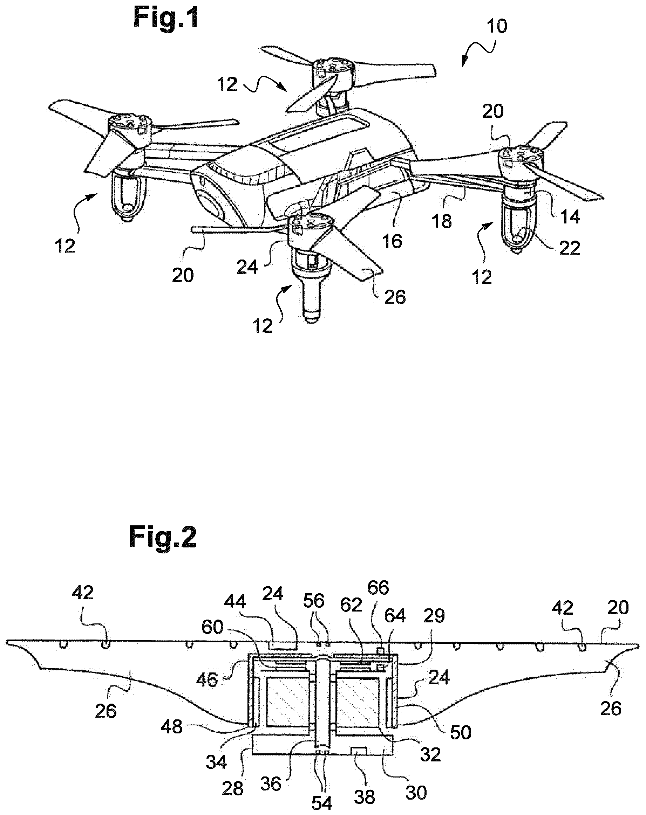

On va maintenant décrire un exemple de mise en oeuvre de l'invention. Sur la Figure 1, la référence 10 désigne de façon générale un drone, qui est par exemple un quadricoptère tel que le modèle *Bebop Drone* de Parrot.

Conformément à l'invention, le drone peut être un drone de type aile volante.

Le drone illustré en Figure 1 comporte quatre blocs propulseurs 12 dont les moteurs sont pilotés indépendamment par un système intégré de navigation et de contrôle d'attitude.

L'invention s'applique également à un drone de type aile volante tel que l'*eBee* de SenseFly ou le *Disco* de Parrot.

Sur la Figure 1, il est représenté le drone 10, avec un corps de drone 16 solidaire de quatre bras de liaison 18 rayonnant à partir du corps du drone. Chaque bras est équipé à son extrémité distale d'un bloc propulseur 12 comprenant un moteur entrainant en rotation une hélice 20.

Selon un mode de réalisation particulier, en partie inférieure, le bloc propulseur 12 est prolongé par un support du corps de drone 22 formant un pied sur lequel pourra reposer au sol le drone à l'arrêt.

Conformément à l'invention, le bloc propulseur 12 comprend une hélice 20 ayant un moyeu 24 et une pluralité de pales 26, notamment au moins deux pales et un moteur électrique 28 du type moteur synchrone sans balais à cage tournante, ayant un support moteur 30.

Le moteur comprend un stator 32 relié au support moteur et un rotor 34 mobile autour d'un axe central de rotation du moteur pour l'entrainement de l'hélice et un dispositif de commande moteur 38. Le dispositif de commande moteur 38 permet de commander et contrôler la vitesse du moteur. Le moteur comprend un arbre central 36, l'arbre central est par exemple un arbre mobile en rotation.

Le moteur 28 de chaque bloc propulseur entraine en rotation une hélice respective 20 s'étendant dans un plan approximativement horizontal au-dessus du bras 18.

Comme illustré en Figure 2, cette hélice 20 comporte notamment un moyeu 24 à partir duquel s'étendent radialement une ou plusieurs pales 26, par exemple au nombre de deux ou de trois comme dans l'exemple illustré de la Figure 1. Le moyeu 24 et les pales 26 sont avantageusement réalisés sous forme monobloc, par exemple à partir d'une matière plastique moulée d'une seule pièce.

De façon caractéristique, le moyeu 24 comprend une paroi supérieure en forme de disque plat prolongée à sa périphérie par une paroi extérieure cylindrique 29 portant les pales 26.

Comme illustré en Figure 2, au moins une pale 26 de l'hélice comprend une pluralité de diodes électroluminescentes 42 et l'hélice comprend un dispositif de commande 44 des diodes électroluminescentes afin de commander l'éclairage ou non de chacune des diodes électroluminescentes et la couleur de chacune des diodes électroluminescentes. Pour ce faire, les diodes électroluminescentes sont par exemple des diodes électroluminescentes polychromatiques ou monochromatiques.

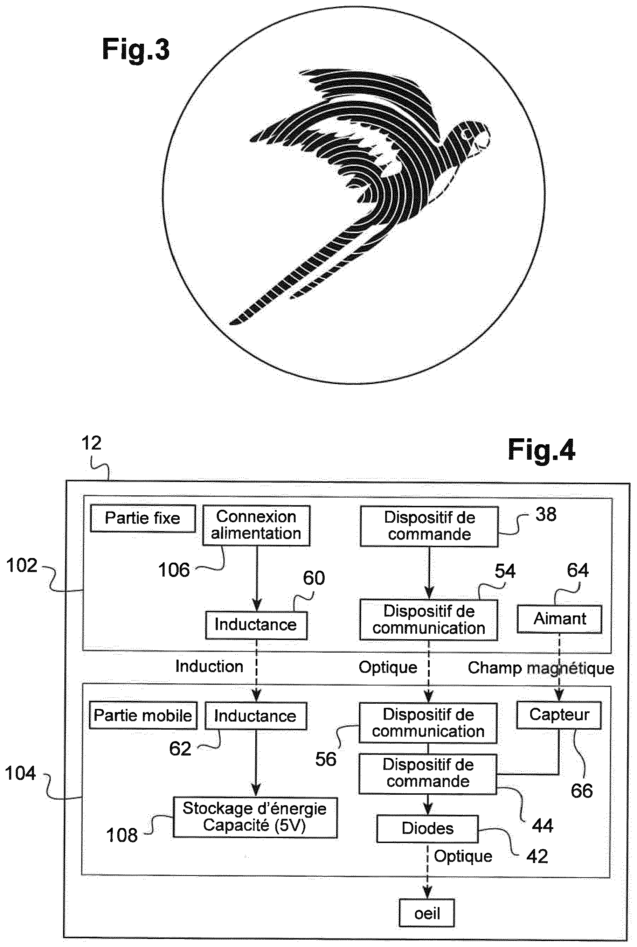

Un tel ensemble permet de créer à partir d'une telle hélice mise en rotation, un affichage tel que montré en Figure 3.

Pour réaliser un tel affichage, la pluralité de diodes électroluminescentes est positionnée sur la longueur de la pale, dans le sens radial de la pale. De préférence, afin de réaliser de la persistance rétinienne sans scintillement, il est nécessaire que l'image complète soit affichée à plus de 30 Hz. Ainsi, l'image affichée est correcte notamment lorsque la vitesse de rotation de l'hélice atteint environ 1 800 rotations par minute.

Le moteur 28 comprend une partie fixe 30 formant support, pouvant être solidarisé au bras de liaison 18 du corps de drone et une partie mobile.

La partie fixe 30 du moteur porte une pluralité de bobinages fixes enroulés sur des mandrins respectifs, ces bobinages étant enroulés autour d'un axe orienté radialement par rapport à l'axe de rotation du moteur et constituant les différents éléments du stator 32 du moteur synchrone permettant la création d'un champ tournant entre les différents bobinages.

La partie mobile du moteur comprend le rotor 34 notamment fixé à une cage tournante 46 sur laquelle sera par exemple solidarisée l'hélice 20 aux fins d'entrainement direct de cette dernière.

Plus précisément, la cage tournante 46 comprend une jupe latérale cylindrique 48 dont le diamètre extérieur est égal au diamètre intérieur de la paroi cylindrique 50 du moyeu 24 de l'hélice, de manière à pouvoir emboiter ce moyeu sur la cage tournante 46, avec un très léger jeu pour pouvoir faire tourner l'hélice autour de la cage lors du montage/démontage de cette hélice sur le moteur.

La jupe latérale 48 porte côté intérieur les éléments magnétiques (aimants permanents) constituant le rotor 34 destinés à être entrainés par le champ tournant créé par les bobinages 32 disposés en vis-à-vis.

La cage tournante 46 est montée sur un arbre central mobile 36 de rotation du moteur.

Conformément à l'invention, l'arbre central 36 est un arbre creux.

La partie fixe 30 formant support du moteur comprend un dispositif de communication 54 et l'hélice comprend également un dispositif de communication 56 intégré dans celle-ci.

Conformément à l'invention, les dispositifs de communication 54, 56 sont positionnés de part et d'autre de l'arbre central 36 creux de rotation du moteur afin d'être apte à communiquer, notamment de manière optique, en utilisant la partie creuse de l'arbre central du moteur.

Selon un mode de réalisation, le moyeu 24 de l'hélice comprend une paroi intégrant le dispositif de communication 56 de sorte que lorsque le moyeu est fixé au moteur 28, le dispositif de communication 56 soit positionné au-dessus de la partie creuse de l'arbre central du moteur.

De même, le support moteur 30 comprend, par exemple inséré dans l'épaisseur du support, un dispositif de communication 54 positionné tel que lors de l'assemblage de l'arbre central 36 du moteur, le dispositif de communication 54 soit positionné au niveau de la partie creuse de l'arbre central 36 du moteur.

Conformément à l'invention, afin de piloter et contrôler l'affichage d'un message par le bloc propulseur, le dispositif de commande moteur 38 est apte à communiquer avec le dispositif de communication 54 du moteur pour émettre des commandes au dispositif de commande 44 des diodes via le dispositif de communication 56 et/ou recevoir des commandes du dispositif de commande 44 des diodes via les dispositifs de communication 56 et 54.

En effet, selon un mode de réalisation particulier, le dispositif de commande moteur 38 pilote l'affichage du message réalisé sur l'hélice, notamment par envoi des commandes au dispositif de commande des diodes de l'hélice afin de faire afficher le message souhaité.

Selon un mode de réalisation particulier, les dispositifs de communication 54 et 56 sont des dispositifs émetteur et récepteur, par exemple, des dispositifs émetteurs/récepteurs à infrarouge.

La communication bidirectionnelle des dispositifs de communication permet :
- d'une part l'envoi de commandes et la mise à jour du logiciel du dispositif de commande des diodes de l'hélice par le dispositif de commande moteur au dispositif de commande des diodes de l'hélice ; et
- d'autre part, la réception, par le dispositif de commande moteur, d'informations par exemple des informations de statut du fonctionnement du dispositif de commande des diodes de l'hélice.

Selon un mode de réalisation, le dispositif de commande des diodes 44 et le dispositif de communication 56 de l'hélice peuvent être surmoulés de sorte à protéger ces dispositifs des chocs et de l'humidité et de permettre de bonnes performances aérodynamiques.

L'affichage via les diodes électroluminescentes de l'hélice permet d'afficher un message textuel, une image notamment en couleur, une vidéo ou un logo tel que représenté en Figure 3.

La commande émise par le dispositif de commande 44 à chacune des diodes électroluminescentes intégrées à l'hélice permet l'allumage ou non de chacune des diodes ainsi que la couleur souhaitée. La persistance rétinienne de l'oeil permet de voir ou lire un message émis par l'hélice lorsque celle-ci est en mouvement.

Afin de transmettre la puissance nécessaire au dispositif de commande 44 des diodes électroluminescentes pour fonctionner, il doit être inséré un mécanisme pour transmettre du moteur à l'hélice cette puissance nécessaire.

Selon un mode de réalisation particulier, le moteur électrique 28 comprend au moins une inductance 60 disposée sur la partie fixe du moteur et au moins une inductance 62 disposée sur la partie mobile du moteur pour recevoir la puissance qui est ensuite transmise à l'hélice notamment via un câble électrique permettant au dispositif de commande 44 des diodes et aux diodes de fonctionner.

Comme illustré sur la Figure 4, l'inductance 60 positionnée sur la partie fixe du moteur et l'inductance 62 positionnée sur la partie mobile du moteur sont couplées de sorte à recevoir de la puissance qui est délivrée aux dispositifs présents dans l'hélice.

En outre, afin de synchroniser l'hélice et la partie fixe du moteur, il est inséré dans le moteur électrique un aimant 64 sur la partie fixe du moteur et il est inséré un capteur de champ magnétique 66, par exemple un capteur à effet Hall, dans l'hélice de sorte à détecter la position de l'hélice par rapport à la partie fixe du moteur.

Selon un aspect particulier, l'hélice comprend des moyens de connexion reliant le dispositif de commande des diodes, le dispositif de communication, les diodes électroluminescentes et le capteur de champ magnétique. Ces moyens de connexion sont réalisés par exemple par un flexible conducteur surmoulé ou un circuit imprimé (PCB), par exemple un circuit imprimé rigide.

La Figure 4 représente de manière schématique l'architecture électronique du bloc propulseur conformément à l'invention.

Il est représenté la partie fixe 102 et la partie mobile 104 du bloc propulseur 12.

La partie fixe du bloc propulseur comprend un moyen de connexion à une alimentation 106, ce moyen de connexion est relié notamment à l'inductance 60 disposée sur la partie fixe le moteur 28 de sorte à venir alimenter l'inductance 62. La partie fixe du bloc propulseur comprend également un dispositif de commande moteur 38 comprenant par exemple un microcontrôleur, le dispositif de commande moteur 38 étant relié au moins au dispositif de communication 56 du moteur.

Enfin, conformément à l'invention, la partie fixe du bloc propulseur comprend un aimant 64.

La partie mobile du bloc propulseur composée de la partie rotor du moteur sur laquelle est assemblée une hélice comprend une inductance 62 apte à alimenter les dispositifs de l'hélice.

Notamment l'inductance 62 est apte à être reliée électriquement à un redresseur et à un accumulateur d'énergie 108, par exemple un condensateur, le redresseur et l'accumulateur d'énergie étant par exemple montés sur l'hélice.

L'hélice comprend un dispositif de communication 56 relié à un dispositif de commande des diodes 44 comprenant par exemple un microcontrôleur, celui-ci pilotant les diodes électroluminescentes 42 positionnées sur au moins une pale de l'hélice. L'accumulateur d'énergie 108 alimente aussi le dispositif de commande des diodes 44 de l'hélice.

Enfin, la partie mobile du bloc propulseur comprend un capteur de champ magnétique 66, par exemple un capteur à effet Hall positionné sur l'hélice et communiquant avec le dispositif de commande des diodes 44 de l'hélice.

Les dispositifs de communication 54 et 56 respectivement de la partie fixe et de la partie mobile du bloc propulseur vont communiquer, notamment par liaison optique, par exemple par infrarouge.

Enfin, l'aimant 64 positionné sur la partie fixe du bloc moteur va émettre un champ magnétique que le capteur à champ magnétique 66 positionné sur la partie mobile du bloc propulseur va détecter.

Ainsi, il apparait clairement à la lecture de cette figure, que les parties fixe et mobile du bloc propulseur sont couplées sans lien physique en ce qui concerne la transmission de puissance, la communication entre les différents dispositifs de communication et pour la synchronisation de ces deux parties.

## Revendications

1. Une hélice (20) destinée à être assemblée sur un moteur électrique du type moteur synchrone sans balais à cage tournante ayant un arbre central creux, comprenant un moyeu (24) et une pluralité de pales (26), **caractérisée en ce qu'**au moins une pale de l'hélice comprend une pluralité de diodes électroluminescentes (42),
et **en ce que** l'hélice comprend en outre :
- un dispositif de commande (44) des diodes électroluminescentes ;
- un dispositif de communication (56) positionné sur le moyeu de l'hélice de manière à communiquer avec un dispositif de communication d'un moteur électrique via l'arbre creux dudit moteur ; et
- le dispositif de commande (44) des diodes étant apte à communiquer avec le dispositif de communication (56) de l'hélice afin d'émettre et/ou recevoir des commandes.

2. L'hélice de la revendication 1, dans laquelle le dispositif de communication est un dispositif émetteur et récepteur.

3. L'hélice de la revendication 1, dans laquelle le dispositif de communication est un dispositif émetteur/récepteur à infrarouge.

4. L'hélice de la revendication 1, dans laquelle l'hélice comprend un capteur de champ magnétique (66).

5. L'hélice de la revendication 1, dans laquelle la pluralité de diodes électroluminescentes est positionnée sur la longueur de l'hélice.

6. Un moteur (28) électrique du type moteur synchrone sans balais à cage tournante, comprenant :
- un support moteur ;
- une partie fixe comprenant un stator (32) relié au support moteur ;
- une partie mobile comprenant un rotor (34) mobile autour d'un axe central de rotation du moteur ; et
- un dispositif de commande moteur (38),
**caractérisé en ce que** :
- le moteur comprend un arbre central creux ;
- le support moteur comprend un dispositif de communication (54) positionné d'un côté de l'arbre creux du moteur de manière à communiquer avec un dispositif de communication (56) intégré dans une hélice assemblée sur le moteur via l'arbre creux dudit moteur ; et
- le dispositif de commande moteur (38) est apte à communiquer avec le dispositif de communication du moteur afin d'émettre et/ou recevoir des commandes.

7. Le moteur de la revendication 6, dans lequel le moteur électrique comprend au moins une inductance (60) disposée sur la partie fixe du moteur et au moins une inductance (62) disposée sur la partie mobile du moteur pour recevoir de la puissance.

8. Le moteur de la revendication 6, dans lequel le dispositif de communication est un dispositif émetteur et récepteur.

9. Le moteur de la revendication 6, dans lequel le dispositif de communication est un dispositif émetteur/récepteur à infrarouge.

10. Le moteur de la revendication 6, dans lequel le moteur électrique comprend un aimant (64) disposé sur la partie fixe du moteur.

11. Un bloc propulseur (12), en particulier pour un drone, comprenant :
- une hélice (20) comprenant un moyeu (24) et une pluralité de pales (26) ;
- un moteur (28) électrique du type moteur synchrone sans balais à cage tournante, ayant un support moteur, le moteur ayant une partie fixe comprenant un stator (32) relié au support moteur, et une partie mobile comprenant un rotor (34) mobile autour d'un axe central de rotation du moteur pour l'entrainement de l'hélice, et un dispositif de commande moteur (38),
**caractérisé en ce que** :
- au moins une pale (26) de l'hélice comprend une pluralité de diodes électroluminescentes (42) ;
- l'hélice comprend en outre un dispositif de commande (44) des diodes électroluminescentes ;
- le moteur comprend un arbre central (36) creux ;
- le support moteur comprend un dispositif de communication (54) apte à communiquer avec un dispositif de communication (56) intégré dans l'hélice, les dispositifs de communication étant positionnés de part et d'autre de l'arbre creux du moteur ; et
- le dispositif de commande moteur (38) est apte à communiquer avec le dispositif de communication (54) du moteur afin d'émettre et/ou recevoir des commandes du dispositif de commande (44) des diodes.

12. Le bloc propulseur de la revendication 11, dans lequel le moteur électrique comprend au moins une inductance (60) disposée sur la partie fixe du moteur et au moins une inductance (62) disposée sur la partie mobile du moteur pour recevoir de la puissance apte à alimenter le dispositif de commande des diodes.

13. Le bloc propulseur de la revendication 11, dans lequel les dispositifs de communication sont des dispositifs émetteur et récepteur.

14. Le bloc propulseur de la revendication 11, dans lequel les dispositifs de communication sont des dispositifs émetteurs/récepteurs à infrarouge.

15. Le bloc propulseur de la revendication 11, dans lequel le moteur électrique comprend un aimant (64) disposé sur la partie fixe du moteur et l'hélice comprend un capteur de champ magnétique (66) de sorte à détecter la position de l'hélice par rapport à la partie fixe du moteur.

16. Un drone (10), comprenant un corps de drone (16) et au moins un bloc propulseur (12) selon l'une des revendications 11 à 15.

## Patentansprüche

1. Propeller (20), der dazu bestimmt ist, an einem Elektromotor des Typs bürstenloser Außenläufer-Synchronmotor mit einer mittigen Hohlwelle montiert zu werden, umfassend eine Nabe (24) und eine Mehrzahl von Rotorblättern (26), **dadurch gekennzeichnet, dass** das mindestens eine Rotorblatt eine Mehrzahl von Leuchtdioden (42) umfasst,
und dass der Propeller ferner Folgendes umfasst:
- eine Vorrichtung zum Steuern (44) der Leuchtdioden,
- eine Kommunikationsvorrichtung (56), die auf der Nabe des Propellers in der Form angeordnet ist, dass sie mit einer Kommunikationsvorrichtung eines Elektromotors über die Hohlwelle des Motors kommuniziert, und
- wobei die Vorrichtung zum Steuern der Dioden (44) dazu eingerichtet ist, mit der Kommunikationsvorrichtung (56) des Propellers zu kommunizieren, um Befehle zu senden und/oder zu empfangen.

2. Propeller nach Anspruch 1, wobei die Kommunikationsvorrichtung eine Sende/Empfangs-Vorrichtung ist.

3. Propeller nach Anspruch 1, wobei die Kommunikationsvorrichtung eine Infrarot-Sende/Empfangs-Vorrichtung ist.

4. Propeller nach Anspruch 1, wobei der Propeller einen Magnetfeldsensor (66) umfasst.

5. Propeller nach Anspruch 1, wobei die Mehrzahl von Leuchtdioden über die Länge des Propellers angeordnet ist.

6. Elektromotor (28) des Typs bürstenloser Außenläufer-Synchronmotor, umfassend
- eine Motorhalterung,
- einen feststehenden Teil, der einen Stator (32) umfasst, der mit der Motorhalterung verbunden ist,
- einen beweglichen Teil, der einen Rotor (34) umfasst, der um eine mittige Rotationsachse des Motors herum beweglich ist, und
- eine Motorsteuerungsvorrichtung (38),
**dadurch gekennzeichnet, dass**
- der Motor eine mittige Hohlwelle umfasst,
- die Motorhalterung eine Kommunikationsvorrichtung (54) umfasst, die auf der einen Seite der Hohlwelle des Motors in der Form angeordnet ist, dass sie mit einer Kommunikationsvorrichtung (56) kommuniziert, die in einen Propeller integriert ist, der an dem Motor über die Hohlwelle des Motors montiert ist, und
- die Motorsteuerungsvorrichtung (38) dazu eingerichtet ist, mit der Kommunikationsvorrichtung des Motors zu kommunizieren, um Befehle zu senden und/oder zu empfangen.

7. Motor nach Anspruch 6, wobei der Elektromotor mindestens eine Induktivität (60) umfasst, die auf dem feststehenden Teil des Motors angeordnet ist, und mindestens eine Induktivität (62) umfasst, die auf dem beweglichen Teil des Motors angeordnet ist, um Leistung aufzunehmen.

8. Motor nach Anspruch 6, wobei die Kommunikationsvorrichtung eine Sende/Empfangs-Vorrichtung ist.

9. Motor nach Anspruch 6, wobei die Kommunikationsvorrichtung eine Infrarot-Sende/Empfangs-Vorrichtung ist.

10. Motor nach Anspruch 6, wobei der Elektromotor einen Magneten (64) umfasst, der auf dem feststehenden Teil des Motors angeordnet ist.

11. Triebwerk (12), insbesondere für eine Drohne, umfassend
- einen Propeller (20), der eine Nabe (24) und eine Mehrzahl von Rotorblättern (26) umfasst,
- einen Elektromotor (28) des Typs bürstenloser Außenläufer-Synchronmotor mit einer mittigen Hohlwelle, wobei der Motor einen feststehenden Teil umfasst, der einen Stator (32) umfasst, der mit der Motorhalterung verbunden ist, und einen beweglichen Teil umfasst, der einen Rotor (34) umfasst, der um eine mittige Rotationsachse des Motors herum beweglich ist für den Antrieb des Propellers, und eine Motorsteuerungsvorrichtung (38),
**dadurch gekennzeichnet, dass**
- das mindestens eine Rotorblatt (26) des Propellers eine Mehrzahl von Leuchtdioden (42) umfasst,
- der Propeller ferner eine Vorrichtung zum Steuern (44) der Leuchtdioden umfasst,
- der Motor eine mittige Hohlwelle (36) umfasst,
- die Motorhalterung eine Kommunikationsvorrichtung (54) umfasst, die dazu eingerichtet ist, mit einer Kommunikationsvorrichtung (56) zu kommunizieren, die in den Propeller integriert ist, wobei die Kommunikationsvorrichtungen beiderseits der Hohlwelle des Motors angeordnet sind, und
- die Motorsteuerungsvorrichtung (38) dazu eingerichtet ist, mit der Kommunikationsvorrichtung (54) des Motors zu kommunizieren, um Befehle der Vorrichtung zum Steuern der Dioden (44) zu senden und/oder zu empfangen.

12. Triebwerk nach Anspruch 11, wobei der Elektromotor mindestens eine Induktivität (60) umfasst, die auf dem feststehenden Teil des Motors angeordnet ist, und mindestens eine Induktivität (62) umfasst, die auf dem beweglichen Teil des Motors angeordnet ist, um Leistung aufzunehmen, die für die Versorgung der Vorrichtung zum Steuern der Dioden eingerichtet ist.

13. Triebwerk nach Anspruch 11, wobei die Kommunikationsvorrichtungen Sende/Empfangs-Vorrichtungen sind.

14. Triebwerk nach Anspruch 11, wobei die Kommunikationsvorrichtungen Infrarot-Sende/Empfangs-Vorrichtungen sind.

15. Triebwerk nach Anspruch 11, wobei der Elektromotor einen Magneten (64) umfasst, der auf dem feststehenden Teil des Motors angeordnet ist, und der Propeller einen Magnetfeldsensor (66) umfasst, um die Position des Propellers relativ zu dem feststehenden Teil des Motors zu detektieren.

16. Drohne (10), umfassend einen Drohnenkörper 1(16) und mindestens ein Triebwerk (12) nach einem der Ansprüche 11 bis 15.

## Claims

1. A propeller (20) intended to be assembled to an electric motor of the rotary-cage brushless synchronous type having a hollow central shaft, comprising a hub (24) and a plurality of blades (26), **characterized in that** at least one blade of the propeller comprises a plurality of light-emitting diodes (42),
and **in that** the propeller further comprises:
- a device (44) for controlling the light-emitting diodes;
- a communication device (56) positioned on the propeller hub so as to communicate with a communication device of an electric motor via the hollow shaft of said motor; and
- the diode control device (44) being adapted to communicate with the communication device (56) of the propeller in order to emit and/or receive commands.

2. The propeller of claim 1, wherein the communication device is a transceiver.

3. The propeller of claim 1, wherein the communication device is an infrared transceiver.

4. The propeller of claim 1, wherein the propeller comprises a magnetic field sensor (66).

5. The propeller of claim 1, wherein the plurality of light-emitting diodes is positioned along the length of the propeller.

6. An electric motor (28) of the rotary-cage brushless synchronous type, comprising:
- a motor support;
- a fixed part comprising a stator (32) connected to the motor support;
- a mobile part comprising a rotor (34) mobile about a central axis of rotation of the motor; and
- a motor control device (38),
**characterized in that**:
- the motor comprises a hollow central shaft;
- the motor support comprises a communication device (54) positioned on one side of the hollow shaft of the motor so as to communicate with a communication device (56) integrated in a propeller assembled to the motor via the hollow shaft of said motor; and
- the motor control device (38) is adapted to communicate with the communication device of the motor in order to emit and/or receive commands.

7. The motor of claim 6, wherein the electric motor comprises at least one inductance (60) arranged on the fixed part of the motor and at least one inductance (62) arranged on the mobile part of the motor for receiving power.

8. The motor of claim 6, wherein the communication device is a transceiver.

9. The motor of claim 6, wherein the communication device is an infrared transceiver.

10. The motor of claim 6, wherein the electric motor comprises a magnet (64) arranged on the fixed part of the motor.

11. A propeller unit (12), in particular for a drone, comprising:
- a propeller (20) comprising a hub (24) and a plurality of blades (26);
- an electric motor (28) of the rotary-cage brushless synchronous type, having a motor support, the motor having a fixed part comprising a stator (32) connected to the motor support, and a mobile part comprising a rotor (34) mobile about a central axis of rotation of the motor for driving the propeller, and a motor control device (38),
**characterized in that**:
- at least one blade (26) of the propeller comprises a plurality of light-emitting diodes (42);
- the propeller further comprises a device (44) for controlling the light-emitting diodes;
- the motor comprises a hollow central shaft (36);
- the motor support comprises a communication device (54) adapted to communicate with a communication device (56) integrated in the propeller, the communication devices being positioned on either side of the hollow central shaft; and
- the motor control device (38) is adapted to communicate with the communication device (54) of the motor in order to emit and/or receive commands from the diode control device (44).

12. The propeller unit of claim 11, wherein the electric motor comprises at least one inductance (60) arranged on the fixed part of the motor and at least one inductance (62) arranged on the mobile part of the motor for receiving power adapted to supply the diode control device.

13. The propeller unit of claim 11, wherein the communication devices are transceivers.

14. The propeller unit of claim 11, wherein the communication devices are infrared transceivers.

15. The propeller unit of claim 11, wherein the electric motor comprises a magnet (64) arranged on the fixed part of the motor and the propeller comprises a magnetic field sensor (66) so as to detect the position of the propeller with respect to the fixed part of the motor.

16. A drone (10), comprising a drone body (16) and at least one propeller unit (12) according to one of claims 11 to 15.
